# EUROPEAN PATENT SPECIFICATION

(11) **EP 3 260 798 B1**
(45) Date of publication and mention of the grant of the patent: **25.12.2019**
(21) Application number: 15884004.1
(22) Date of filing: 15.10.2015
(51) Int. Cl.: H01M 8/04119, B01D 19/00, H01M 8/0662

(54) **GAS-LIQUID SEPARATOR FOR FUEL CELL SYSTEM**
GAS-FLÜSSIGKEITSABSCHEIDER FÜR BRENNSTOFFZELLENSYSTEM
SÉPARATEUR GAZ-LIQUIDE POUR SYSTÈME DE PILE À COMBUSTIBLE

(30) Priority: 05.03.2015 JP 2015043290
(43) Date of publication of application: 27.12.2017
(73) Proprietor: Brother Kogyo Kabushiki Kaisha, Nagoya-shi, Aichi 467-8561 (JP)
(72) Inventor: ODE, Yasuhito, Nagoya-shi Aichi 467-8561 (JP)
(74) Representative: Prüfer & Partner mbB Patentanwälte · Rechtsanwälte
(86) International application number: PCT/JP2015/079210
(87) International publication number: WO 2016/139838

(56) References cited:
- DE-B- 1 150 847
- DE-U- 7 108 460
- JP-A- H06 176 778
- JP-A- H07 124 640
- JP-A- 2006 004 680
- JP-A- 2006 100 239
- JP-A- 2006 331 674
- JP-A- 2008 241 064
- US-A1- 2007 000 791
- US-A1- 2008 216 655

## Description

### FIELD

The present invention relates to a fuel cell system comprising a gas-liquid separator.

### BACKGROUND

A fuel exhaust gas which is discharged from a fuel cell using hydrogen and oxygen as fuel is mixed with water. A structure of separating the fuel exhaust gas into fuel and water by a gas-liquid separator and reusing the fuel is known.

Japanese Patent Laid-open Publication No. 2008-241064 proposes a gas-liquid separator used for an air conditioner. In the gas-liquid separator, a gas-liquid two phase refrigerant collides with an inner side surface of the gas-liquid separator so as to be dispersed in the up and down direction. A liquid refrigerant which is dispersed downward stays at the lower side, and the liquid refrigerant which is dispersed upward falls downward by the gravity so as to stay at the lower side.

Document US 2007/000791 A1 discloses an ion-removing apparatus including a housing, a first ion-removing unit and a second ion-removing unit. The housing includes an inlet port, a liquid discharge port and a gas discharge port. The first ion-removing unit is disposed within the housing, so that the fluid that has entered the housing via the inlet port flows through the first ion-removing unit. The first ion-removing unit serves to remove a first ion, such anions, contained in the fluid. The second ion-removing unit is disposed within the housing, so that the fluid that has flown though the first ion-removing unit flows through the first ion-removing unit. The second ion-removing unit serves to remove a second ion, such as cations contained in the fluid. The liquid contained in the fluid that has flown through the second ion-removing unit is discharged from the liquid discharge port. The gas contained in the fluid that has flown through the second ion-removing unit is discharged from the gas discharge port.

Document US 2008/216655 A1 discloses a centripetal cyclone for separating particulate material from a particulate laden gas solids stream. The cyclone comprises a housing defining a conduit extending between an upstream inlet and a downstream outlet. In operation, when a gas-solids stream passes through the upstream housing inlet, the gas-solids stream is directed through the conduit and at least a portion of the solids in the gas-solids stream are subjected to a centripetal force within the conduit.

Document DE 11 50 847 B discloses a pipe branch piece whose housing is partially formed by the shell of a ball and in which the center of the ball is outside the intersection of the tube axes.

Document DE 71 08 460 discloses a branch fitting for vertical pipes of monotube heaters.

Document JP H07 124640 A discloses a metal piece and a method for joining a copper tube.

Document JP 2006 100239 A discloses a fuel cell system with an ionexchange resin member.

Document JP 2008 241064 A discloses a gas-liquid separator comprising an inlet pipe led out from the intermediate of the evaporation heat exchanger, a vertical upper outlet pipe and a vertical lower outlet pipe, and the gas-liquid two-phase refrigerant from the inlet pipe is allowed to collide with a side wall of the gas-liquid separator and disperse so that the liquid refrigerant is separated to the vertical lower outlet pipe and the gas refrigerant is separated to the vertical upper outlet pipe.

JP H06 176778 A discloses a steam separator with a vertically long shape, and a gas-liquid separating tube which receives two-phase stream, and which is horizontally long, being mounted on the upper part side surface of the steam separator. A silencer pipe, which has a cylindrical shape having a plurality of holes, and by which gas-liquid is separated into pressurized water and steam by means of the collision between the two-phase stream, is provided in the gas-liquid separating tube.

### SUMMARY

However, in the gas-liquid separator disclosed in prior art, in particular Japanese Patent Laid-open Publication No. 2008-241064, a long space is needed in the up and down direction in order to cause the liquid refrigerant dispersed upward to fall downward by the gravity. For this reason, a problem that the height dimension of the gas-liquid separator increases arises.

The invention is defined by the appended claims and is made to solve the above-described problems, and an object of the invention is to provide a fuel cell system with a gas-liquid separator capable of decreasing the height dimension thereof.

A fuel cell system with a gas-liquid separator according to an aspect of the present invention used in the anode gas line, comprises: a main pipe which extends in the up and down direction; an introduction pipe which is connected to a side surface of the main pipe so as to intersect the side surface; an inlet pipe into which exhaust gas flows, which is further connected to the introduction pipe; an upper outlet pipe which is connected to the upper side of the main pipe; and a lower outlet pipe which is connected to the lower side of the main pipe, wherein the introduction pipe includes an enlarged portion having a passage cross-sectional area larger than a passage cross-sectional area of the inlet pipe, wherein a passage cross-sectional area of the lower outlet pipe is larger than that of the inlet pipe and the passage cross-sectional area of the lower outlet pipe is larger than that of the upper outlet pipe.

According to this aspect, the speed of the fuel exhaust gas decreases in the enlarged portion of the introduction pipe, and hence the water is easily concentrated downward. Since the water flows into the main pipe near the underside of the introduction pipe, the water is easily dispersed downward inside the main pipe.

Further, as a speed at which the exhaust gas flows into the main pipe decreases, the water is easily dispersed downward inside the main pipe due to the influence of the gravity. For this reason, a ratio in which the water is dispersed upward inside the main pipe decreases. Thus, even when the dimension of the upper portion of the main pipe decreases, the water separating rate can be maintained, and hence the dimension of the gas-liquid separator in the height direction can be decreased.

The above and further objects and features will more fully be apparent from the following detailed description with accompanying drawings.

### BRIEF DESCRIPTION OF THE DRAWINGS

FIG. 1 is a system diagram of a fuel cell system using a gas-liquid separator of a first embodiment of the invention;
FIG. 2 is a longitudinal sectional view of the gas-liquid separator of the first embodiment of the invention;
FIG. 3 is a graph illustrating a relation between an exhaust gas flow rate and a water separating rate of the gas-liquid separator of the first embodiment of the invention;
FIG. 4 is a longitudinal sectional view illustrating a gas-liquid separator of a second embodiment of the invention;
FIG. 5 is a longitudinal sectional view illustrating a gas-liquid separator of a third embodiment of the invention;
FIG. 6 is a longitudinal sectional view illustrating a gas-liquid separator of a first modified example of the invention; and
FIG. 7 is a longitudinal sectional view illustrating a gas-liquid separator of a second modified example of the invention.

### [Mode for Carrying out Invention]

### [First Embodiment]

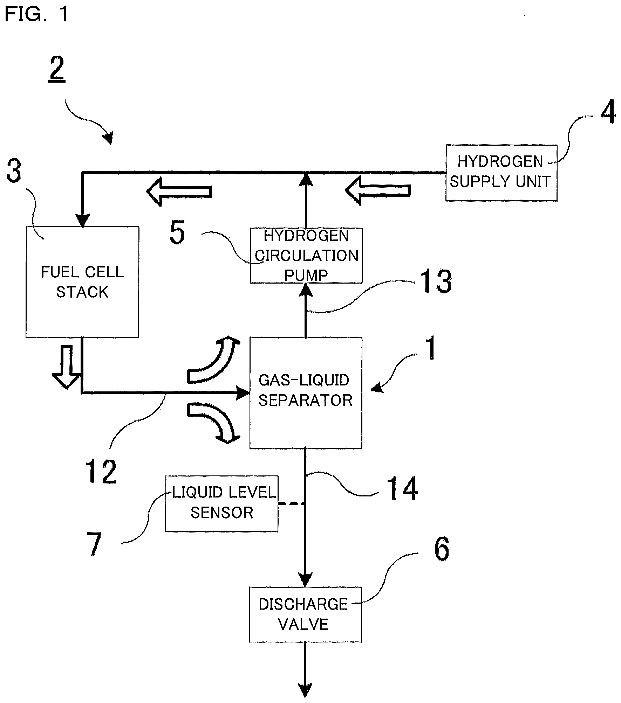

Hereinafter, a first embodiment of the invention will be described with reference to FIG. 1.

### <System Diagram>

A gas-liquid separator of the invention is used in, for example, an anode gas line of a fuel cell system.

In FIG. 1, a gas-liquid separator 1 is disposed inside a fuel cell system 2. The fuel cell system 2 is a system which generates power in a fuel cell stack 3 by using hydrogen and oxygen as fuel and supplies the power to a desired device.

Hydrogen is supplied from a hydrogen supply unit 4 to the intake side of the fuel cell stack 3. As the hydrogen supply unit 4, for example, a high-pressure hydrogen cylinder or a hydrogen storage alloy cylinder can be used.

The exhaust side of the fuel cell stack 3 is connected to an inlet pipe 12 to be described later. In the fuel cell stack 3, an exhaust gas of hydrogen including impurities such as water is generated in accordance with the power generation. The exhaust gas is introduced into the inlet pipe 12 and is separated into water and a gas component by the gas-liquid separator 1. The gas component is introduced to the intake side of the fuel cell stack 3 by a hydrogen circulation pump 5 again. That is, the fuel cell system 2 is that of a hydrogen circulation type.

A discharge valve 6 is connected to the lower side of a lower outlet pipe 14 to be described later. The discharge valve 6 is normally closed, and stores water separated by the gas-liquid separator 1 inside the lower outlet pipe 14. The discharge valve 6 is configured as, for example, a solenoid valve which is opened and closed based on an instruction (a signal) from a control unit (not shown). Further, an electric valve which is opened and closed by a motor may be used instead of the solenoid valve. The discharge valve 6 is opened by the instruction from the control unit (not shown) so that impurities such as water stored inside the lower outlet pipe 14 are discharged to the outside of the fuel cell system 2. That is, only water can be discharged when the discharge valve 6 is opened, and hence the discharge of a fuel gas can be prevented.

A liquid level sensor 7 is disposed at the side surface of the lower outlet pipe 14. The liquid level sensor 7 detects the water level of the water stored inside the lower outlet pipe 14 and transmits the information of the water level to the control unit (not shown).

Further, the fuel cell system 2 also includes an oxygen passage and the like, but since these components do not correspond to the characteristic points of the invention, these components are omitted in the drawings.

### <Gas-Liquid Separator>

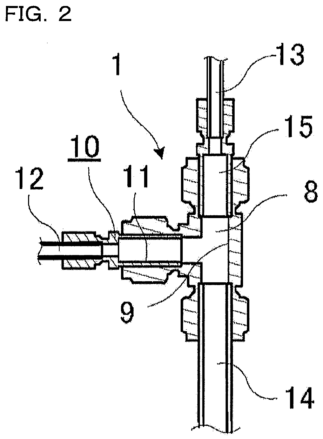

Next, the structure of the gas-liquid separator of the invention will be described with reference to FIG. 2.

In FIG. 2, a main pipe 8 is disposed so as to extend in the vertical direction. One end of the introduction pipe 10 is connected to the center position of the side surface of the main pipe 8 in the up and down direction so as to intersect the main pipe 8 in the perpendicular direction. The inlet pipe 12 is connected to the other end of the introduction pipe 10. The introduction pipe 10 and the inlet pipe 12 are disposed so as to extend in the horizontal direction. Further, the introduction pipe 10 and the inlet pipe 12 are coaxially disposed in series. The introduction pipe 10 includes an enlarged portion 11, and the inner diameter (the passage cross-sectional area) of the enlarged portion 11 is larger than the inner diameter of the inlet pipe 12.

A connection pipe 15 is connected to the upper end of the main pipe 8. An upper outlet pipe 13 is connected to the upper end of the connection pipe 15 so as to extend upward. The connection pipe 15 is a component which is used to connect the main pipe 8 and the upper outlet pipe 13 to each other in the embodiment. For example, the connection pipe 15 can be omitted in a shape in which the main pipe 8 and the upper outlet pipe 13 can be directly connected to each other. The inner diameter of the inlet pipe 12 is equal to the inner diameter of the upper outlet pipe 13. The lower outlet pipe 14 is connected to the lower end of the main pipe 8 so as to extend downward.

As the materials of various pipes used in the gas-liquid separator 1, for example, a rigid or soft pipe or tube can be used. As the materials of the rigid pipe or tube, for example, metal such as stainless steel may be used. As the materials of the soft pipe or tube, for example, various engineering plastic or synthetic resin such as polypropylene may be used. Further, various pipes may be coupled to each other or welded by metallic pipes.

As a component used in the main pipe 8, a so-called T-shaped joint may be used. An easy connection can be made by the T-shaped joint including structure used to couple the pipes in the up and down direction and one direction at the side surface.

As the cross-sectional shapes of the above-mentioned various pipes, circular shapes are used, but oval or polygonal shapes may be used. However, since there is a possibility that water may be stored in a corner portion or an unevenness portion of a pipe wall surface, a circular shape is desirable.

In the embodiment, the inner diameter dimension of the main pipe 8 is set to 10.4 mm, the inner diameter dimensions of the inlet pipe 12 and the upper outlet pipe 13 are set to 4.57 mm, and the inner diameter dimensions of the enlarged portion 11 of the introduction pipe 10 and the lower outlet pipe 14 are set to 9.5 mm. Further, the inner diameter of the connection pipe 15 is smaller than the inner diameter of the main pipe 8 and is larger than the inner diameter of the upper outlet pipe 13.

### <Operation of Gas-Liquid Separator>

The operation and the action of the gas-liquid separator 1 having the above-described configuration will be described.

An exhaust gas of hydrogen including impurities such as water is discharged from the exhaust side of the fuel cell stack 3. In FIG. 1, the exhaust gas flows from the left side of the gas-liquid separator 1 into the inlet pipe 12, passes through the introduction pipe 10, and flows into the main pipe 8. The water included in the exhaust gas is brought into contact with an inner wall 9 of the main pipe 8 and is dispersed in the up and down direction. The water dispersed downward flows into the lower outlet pipe 14. The water dispersed upward falls downward by the gravity and flows into the lower outlet pipe 14. At this time, a distance necessary for causing the water to fall downward by the gravity increases as the speed of the water dispersed upward and the exhaust gas increases. That is, the dimension of the main pipe 8 in the up and down direction increases. However, in the structure of the embodiment, the length of the main pipe 8 can be shortened by the adjustment of the inner diameter dimensions of various pipes. Further, the gas component flows in the upper outlet pipe 13 by the specific gravity of the water and the gas.

An exhaust gas which flows from the inlet pipe 12 decreases in speed in the enlarged portion 11 since the inner diameter of the enlarged portion increases. As the speed of the exhaust gas inside the introduction pipe 10 decreases, the water is easily concentrated downward by the gravity. Since the water is concentrated downward so as to flow into the main pipe 8, the water is easily dispersed downward. Further, the water is easily dispersed downward by the gravity as the speed of the exhaust gas flowing into the main pipe 8 decreases. Further, the water is easily dispersed downward as the speed of the exhaust gas contacting the inner wall 9 decreases. The water dispersed downward flows inside the lower outlet pipe 14.

Further, when the speed of the exhaust gas is sufficiently slow, the water is influenced by the gravity and hence directly falls in the lower outlet pipe 14 while not contacting the inner wall 9.

As the inner diameter of the main pipe 8 increases, a distance in which the water flows into the main pipe 8 and contacts the inner wall 9 increases. As the distance from the inner wall 9 increases, the water easily falls downward by the influence of the gravity. The water which contacts the lower side of the axis of the introduction pipe 10 toward the inner wall 9 falls downward and flows into the lower outlet pipe 14.

As described above, since the water in the main pipe 8 easily flows into the lower outlet pipe 14, the water separating rate can be maintained even when the upward length dimension of the main pipe 8 is shortened, and hence the dimension of the gas-liquid separator 1 can be decreased.

### <Water Jamming Test>

A test involved with the existence of water jamming and the inner diameter of the lower outlet pipe 14 in the gas-liquid separator 1 of the embodiment was performed. When the inner diameter of the lower outlet pipe 14 is small, water jamming occurs inside the lower outlet pipe 14. Thus, there is a possibility that water droplets may not fall and stay halfway. When the water jamming occurs, various problems arise. For example, when the water droplets stay at the reaction position of the liquid level sensor 7, the liquid level sensor reacts although a predetermined amount of water is not stored in actual. Thus, there is a possibility that the frequency of opening and closing the discharge valve 6 may increase. Further, when bubbles are generated at the reaction position of the liquid level sensor 7, the liquid level sensor 7 does not react even when a predetermined amount of water is stored. Thus, there is a possibility that the water may not be drained.

In the test, the fuel cell system 2 was operated while the inner diameter of the lower outlet pipe 14 was changed to 5 mm, 6.5 mm, and 8 mm in turns, and the existence of the water jamming in the lower outlet pipe 14 was measured.

As a test result, the water jamming occurred when the inner diameter of the lower outlet pipe 14 was 5 mm and 6.5 mm, but the water jamming did not occur when the inner diameter was 8 mm. From the test result, it is desirable that the inner diameter of the lower outlet pipe 14 be 8 mm or more. When the inner diameter of the lower outlet pipe 14 is equal to or larger than 8 mm and equal to or smaller than the inner diameter of the main pipe 8, the water storage space decreases, and hence the dimension of the gas-liquid separator 1 in the height direction can be decreased.

In the embodiment, the inner diameter of the lower outlet pipe 14 was set to 9.5 mm due to the reason of the distribution of pipe components.

### <Exhaust Gas Flow Rate Test>

A test of measuring a relation between a water separating rate and a changed flow rate of an exhaust gas in the gas-liquid separator 1 of the embodiment was performed.

In the fuel cell stack 3 of the embodiment, the water generation amount obtained when power is generated at the rated power is about 8 mL/min at maximum. A test was performed at 10 mL/min in consideration of a margin on the assumption that the entire water was discharged to the anode side and flowed into the gas-liquid separator 1.

In the test, an air pump capable of blowing an arbitrary amount of air was used instead of the fuel cell stack. The air pump was connected to the inlet pipe 12 so as to feed air into the gas-liquid separator 1 and water of 10 mL/min was input between the inlet pipe 5 and the air pump. By the comparison of the amount of the water flowing from the inlet pipe 12 and the amount of the water discharged from the lower outlet pipe 14, the water separating rate was calculated.

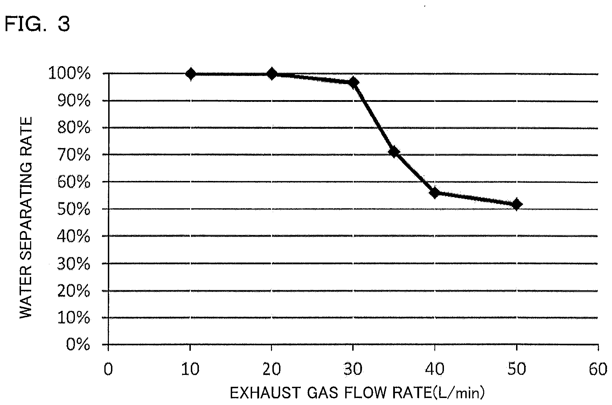

The test result is shown in FIG. 3. In FIG. 3, the separating rate is about 100% in an area in which the flow rate of the exhaust gas is small, but the separating rate decreases as the flow rate of the exhaust gas increases. In the configuration of the gas-liquid separator 1 of the embodiment, the water separating rate was 90% or more in an area in which the air flow rate is 30 L/min or less. In this case, hydrogen can be circulated inside the fuel cell system 2 with high efficiency.

In the gas-liquid separator 1 of the embodiment, since the inner diameter of the lower outlet pipe 14 is larger than the inner diameter of the inlet pipe 12 and the inner diameter of the lower outlet pipe 14 is larger than the inner diameter of the upper outlet pipe 13, the separated water easily flows to the lower outlet pipe 14.

Further, since the inner diameter of the inlet pipe 12 is equal to the inner diameter of the upper outlet pipe 13, the flow rate of the exhaust gas is uniformed between the inlet and the outlet, and hence a design involved with the selection of components inside the hydrogen circulation line is easily made.

Further, since the inner diameter of the main pipe 8 is larger than the inner diameter of the enlarged portion 11, the distance from the introduction pipe 10 to the wall of the main pipe 8 is long, and the water is easily dispersed downward inside the main pipe 8. Then, since the flow rate of the exhaust gas inside the main pipe 8 decreases, water droplets easily fall downward in the vertical direction. Accordingly, even when the dimension of the upper portion of the main pipe 8 is decreased, the water separating rate can be ensured, and hence the dimension of the gas-liquid separator 1 in the height direction can be decreased.

### [Second Embodiment]

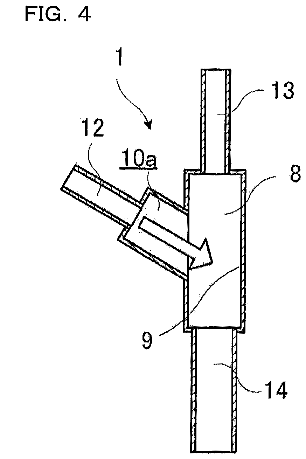

Next, a second embodiment of the invention will be described with reference to FIG. 4. In the embodiment, the connection between the main pipe 8 and an introduction pipe 10a is different from that of the first embodiment. In the first embodiment, the introduction pipe 10 is connected to the main pipe 8 in the perpendicular direction. However, in the embodiment, the introduction pipe 10a is connected to the main pipe 8 while forming a downward angle toward the exhaust gas flow direction. Further, since the configuration except for the connection portion between the introduction pipe 10a and the main pipe 8 is similar to the first embodiment, the detailed description thereof will be omitted.

In FIG. 4, the main pipe 8 is disposed so as to extend in the vertical direction. One end of the introduction pipe 10a is connected to the center position of the side surface of the main pipe 8 in the up and down direction so as to intersect the main pipe 8. The inlet pipe 12 is connected to the other end of the introduction pipe 10. The introduction pipe 10a is connected to the main pipe 8 while forming a downward angle toward the exhaust gas flow direction. Further, the introduction pipe 10a and the inlet pipe 12 are coaxially disposed in series.

Even in this case, the same effect as the above-described configuration can be obtained. Further, since the introduction pipe 10a is disposed downward toward the exhaust gas flow direction, water is easily dispersed downward when the water contacts the inner wall 9.

### [Third Embodiment]

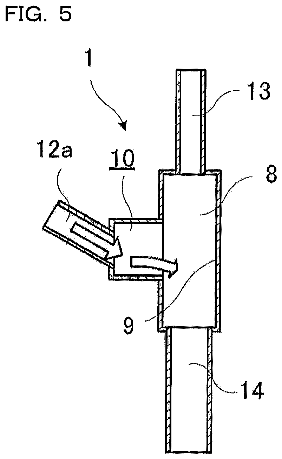

Next, a third embodiment of the invention will be described with reference to FIG. 5. In the embodiment, the connection between the introduction pipe 10 and an inlet pipe 12a is different from that of the first embodiment. In the first embodiment, the inlet pipe 12 and the introduction pipe 10 are disposed coaxially so as to be connected to each other in series. However, in the embodiment, the inlet pipe 12a is connected to the introduction pipe 10 while forming a downward angle toward the exhaust gas flow direction. Further, since the configuration except for the connection portion between the inlet pipe 12a and the introduction pipe 10 is similar to the first embodiment, the detailed description thereof will be omitted.

In FIG. 5, the main pipe 8 is disposed so as to extend in the vertical direction. One end of the introduction pipe 10 is connected to the center position of the side surface of the main pipe 8 in the up and down direction so as to intersect the main pipe 8 in the perpendicular direction. The inlet pipe 12a is connected to the other end of the introduction pipe 10. The inlet pipe 12a is connected to the introduction pipe 10 while forming a downward angle toward the exhaust gas flow direction.

Even in this case, the same effect as the above-described configuration can be obtained. Further, since the inlet pipe 12a is disposed downward in the exhaust gas flow direction, the water included in the exhaust gas flows with being concentrated to the underside of the introduction pipe 10 by the gravity, and hence the water is easily dispersed downward when the water flows into the main pipe 8.

While the embodiments have been described above, the invention is not limited to the above-described embodiments, and various modifications can be made within the scope of claims. That is, even the embodiment obtained by the combination of the technical means modified in the scope of claims is included in the technical scope of the invention.

Hereinafter, modified examples of the above-described embodiments will be described.

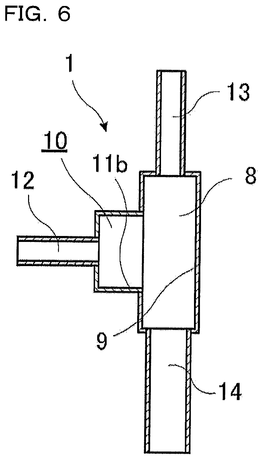

For example, as shown in FIG. 6, the inner diameter of an enlarged portion 11b may be larger than the inner diameter of the main pipe 8. Even in this case, the same effect as the above-described configuration can be obtained. As the inner diameter of the enlarged portion 11b increases, a speed at which the exhaust gas flows into the main pipe 8 decreases, and hence the water easily flows to the lower outlet pipe 14. That is, since the inner diameter of the enlarged portion 11b is larger than the inner diameter of the main pipe 8, the inner diameter of the enlarged portion 11b is larger than the inner diameter of the upper outlet pipe 13, and the inner diameter of the enlarged portion 11b is largest, the flow rate becomes slow. For this reason, a ratio in which the water is dispersed upward inside the main pipe 8 is further decreased. Thus, even when the dimension of the upper portion of the main pipe 8 is decreased, the water separating rate can be ensured, and hence the dimension of the gas-liquid separator 1 in the height direction can be decreased.

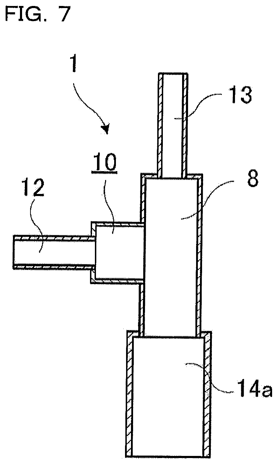

Further, for example, as shown in FIG. 7, the inner diameter of a lower outlet pipe 14a may be larger than the inner diameter of the main pipe 8. Even in this case, the same effect as the above-described configuration can be obtained. Further, the water storage amount inside the lower outlet pipe 14a increases, and hence the frequency of discharging the water by opening and closing the discharge valve 6 can be decreased. Further, since the water storage amount increases, the length of the lower outlet pipe 14a can be shortened.

Further, the introduction pipe 10 may be connected to a position other than the center position of the main pipe 8 in the up and down direction. For example, the position may be the 1/3 lower side or the 1/3 upper side.

Further, in the above-described embodiments, various pipes are formed separately and are connected to one another, but various members may be integrally connected to one another. For example, the inlet pipe and the introduction pipe may be integrally formed with each other.

As described above according to the present invention a fuel cell system comprising a gas-liquid separator in an anode gas line is provided, wherein the gas-liquid separator is adapted to separate exhaust gas into water and a gas component and comprises: a main pipe which extends in the up and down direction; an introduction pipe which is connected to a side surface of the main pipe so as to intersect the side surface; an inlet pipe into which exhaust gas flows which is further connected to the introduction pipe; an upper outlet pipe which is connected to the upper side of the main pipe; and a lower outlet pipe which is connected to the lower side of the main pipe, wherein the introduction pipe includes an enlarged portion having a passage cross-sectional area larger than a passage cross-sectional area of the inlet pipe, wherein a passage cross-sectional area of the lower outlet pipe is larger than that of the inlet pipe and the passage cross-sectional area of the lower outlet pipe is larger than that of the upper outlet pipe.

According to the present invention, the speed of the exhaust gas is decreased in the enlarged portion of the introduction pipe, and hence the water is easily concentrated downward. Since the water flows into the main pipe near the underside of the introduction pipe, the water is easily dispersed downward inside the main pipe. Further, as a speed at which the exhaust gas flows into the main pipe decreases, the water is easily dispersed downward inside the main pipe due to the influence of the gravity. For this reason, a ratio in which the water is dispersed upward inside the main pipe decreases. Thus, even when the dimension of the upper portion of the main pipe is decreased, the water separating rate can be maintained, and hence the dimension of the gas-liquid separator in the height direction can be decreased.

Furthermore, since the passage cross-sectional area of the lower outlet pipe is large, the separated water easily flows to the lower outlet pipe.

According to an aspect of the present invention, in the gas-liquid separator according to the above, the passage cross-sectional area of the inlet pipe is equal to the passage cross-sectional area of the upper outlet pipe.

According to this aspect, since the flow rate can be uniformed between the inlet and the outlet of the exhaust gas, a design involved with the selection of components inside the hydrogen circulation line is easily made. For example, this configuration is particularly effective in the system in which the flow rate needs to be uniformed.

According to an aspect of the present invention, in the gas-liquid separator according to the above aspect, a passage cross-sectional area of the enlarged portion is larger than that of the main pipe and the passage cross-sectional area of the enlarged portion is larger than that of the upper outlet pipe.

According to this aspect, since the passage cross-sectional area of the enlarged portion of the introduction pipe is largest, the flow rate in the enlarged portion is slowest. For this reason, a ratio in which the water is dispersed upward inside the main pipe is further decreased. Thus, even when the dimension of the upper portion of the main pipe is decreased, the water separating rate can be maintained, and hence the dimension of the gas-liquid separator in the height direction can be decreased.

According to an aspect of the present invention, in the gas-liquid separator according to the above aspect, a passage cross-sectional area of the main pipe is larger than that of the enlarged portion.

According to this aspect, since the passage cross-sectional area of the main pipe is large, a distance from the introduction pipe to the wall of the main pipe increases, and hence the water is easily dispersed downward inside the main pipe. Further, since the flow rate of the exhaust gas is slow inside the main pipe, water droplets easily fall downward in the vertical direction. For this reason, even when the dimension of the upper portion of the main pipe is decreased, the water separating rate can be maintained, and hence the dimension of the gas-liquid separator in the height direction can be decreased.

According to an aspect of the present invention, in the gas-liquid separator according to the above aspect, the main pipe, the introduction pipe, the inlet pipe, the upper outlet pipe, and the lower outlet pipe have circular cross-sectional shapes.

According to this aspect, since the pipe has a circular cross-sectional shape, the amount of the water staying at each corner inside the pipe decreases. Thus, water droplets easily fall downward inside the pipe in the vertical direction, and the water separating rate increases.

According to an aspect of the present invention, in the gas-liquid separator according to the above aspect, the lower outlet pipe includes an openable valve.

According to this aspect, when the water is stored in the lower outlet pipe while the valve is closed and then the valve is opened, only the water can be discharged. For this reason, the discharge of the fuel gas is prevented.

According to an aspect of the present invention, in the gas-liquid separator according to the above aspect, an inner diameter of the lower outlet pipe is set to be equal to or larger than 8 mm and equal to or smaller than an inner diameter of the main pipe.

According to this aspect, the water storage space can be efficiently used while the water jamming in the lower outlet pipe is prevented. For this reason, the water storage space is decreased, and hence the dimension of the gas-liquid separator in the height direction can be decreased.

According to an aspect of the present invention, the gas-liquid separator according to the above aspect is used in the fuel cell system in which a flow rate of the anode gas line is 30 L/min or less.

According to this aspect, the water can be separated from the anode gas at the efficiency of 90% or more, and hence hydrogen can be circulated inside the fuel cell system with high efficiency.

### [Description of Reference Numerals]

1 gas-liquid separator
8 main pipe
9 inner wall
10, 10a introduction pipe
11, 11b enlarged portion
12, 12a inlet pipe
13 upper outlet pipe
14 lower outlet pipe

## Claims

1. A fuel cell system (2) comprising a gas-liquid separator (1) in an anode gas line, wherein the gas-liquid separator (1) is adapted to separate exhaust gas into water and a gas component and comprises:
a main pipe (8) which extends in the up and down direction;
an introduction pipe (10, 10a) which is connected to a side surface of the main pipe (8) so as to intersect the side surface;
an inlet pipe (12, 12a) into which exhaust gas flows, which is further connected to the introduction pipe (10, 10a);
an upper outlet pipe (13) which is connected to the upper side of the main pipe (8); and
a lower outlet pipe (14) which is connected to the lower side of the main pipe (8), wherein
the introduction pipe (10, 10a) includes an enlarged portion (11, 11b) having a passage cross-sectional area larger than a passage cross-sectional area of the inlet pipe (12, 12a), **characterized in that**
a passage cross-sectional area of the lower outlet pipe (14) is larger than that of the inlet pipe (12, 12a) and the passage cross-sectional area of the lower outlet pipe (14) is larger than that of the upper outlet pipe (13).

2. The fuel cell system (2) according to claim 1 , **characterized in that**
the passage cross-sectional area of the inlet pipe (12) is equal to the passage cross-sectional area of the upper outlet pipe (13).

3. The fuel cell system (2) according to any one of claims 1 or 2, **characterized in that**
a passage cross-sectional area of the enlarged portion (11b) is larger than that of the main pipe (8) and the passage cross-sectional area of the enlarged portion (11b) is larger than that of the upper outlet pipe (13).

4. fuel cell system (2) according to any one of claims 1 or 2, **characterized in that**
a passage cross-sectional area of the main pipe (8) is larger than that of the enlarged portion (11).

5. The fuel cell system (2) according to any one of claims 1 to 4, **characterized in that**
the main pipe (8), the introduction pipe (10, 10a), the inlet pipe (12, 12a), the upper outlet pipe (13), and the lower outlet pipe (13) have circular cross-sectional shapes.

6. The fuel cell system (2) according to any one of claims 1 to 5, **characterized in that**
the lower outlet pipe (14) includes an openable valve.

7. The fuel cell system (2) according to claim 6, **characterized in that**
an inner diameter of the lower outlet pipe (14) is set to be equal to or larger than 8 mm and equal to or smaller than an inner diameter of the main pipe (8).

8. The fuel cell system (2) according to any one of claims 1 to 7, wherein
a flow rate of the anode gas line is 30 L/min or less.

## Patentansprüche

1. Brennstoffzellensystem (2), umfassend einen Gas-Flüssigkeitsabscheider (1) in einer Anodengasleitung, worin der Gas-Flüssigkeitsabscheider (1) geeignet ist, Abgas in Wasser und eine Gaskomponente zu trennen, und umfasst:
ein Hauptrohr (8), das sich in der Auf- und Abwärtsrichtung erstreckt;
ein Einführungsrohr (10, 10a), das mit einer Seitenfläche des Hauptrohrs (8) verbunden ist und die Seitenfläche schneidet;
ein Einlassrohr (12, 12a), in welches das Abgas strömt, das ferner mit dem Einführungsrohr (10, 10a) verbunden ist;
ein oberes Auslassrohr (13), das mit der Oberseite des Hauptrohrs (8) verbunden ist; und
ein unteres Auslassrohr (14), das mit der Unterseite des Hauptrohrs (8) verbunden ist, wobei
das Einführungsrohr (10, 10a) einen vergrößerten Abschnitt (11, 11b) mit einer Durchgangsquerschnittsfläche aufweist, die größer als eine Durchgangsquerschnittsfläche des Einlassrohrs (12, 12a) ist, **dadurch gekennzeichnet, dass**
eine Durchgangsquerschnittsfläche des unteren Auslassrohrs (14) größer als die des Einlassrohrs (12, 12a) ist und die Durchgangsquerschnittsfläche des unteren Auslassrohrs (14) größer als die des oberen Auslassrohrs (13) ist.

2. Brennstoffzellensystem (2) gemäß Anspruch 1, **dadurch gekennzeichnet, dass**
die Durchgangsquerschnittsfläche des Einlassrohrs (12) gleich der Durchgangsquerschnittsfläche des oberen Auslassrohrs (13) ist.

3. Brennstoffzellensystem (2) gemäß einem der Ansprüche 1 oder 2, **dadurch gekennzeichnet, dass**
eine Durchgangsquerschnittsfläche des vergrößerten Abschnitts (11b) größer ist als die des Hauptrohrs (8) und die Durchgangsquerschnittsfläche des vergrößerten Abschnitts (11b) größer ist als die des oberen Auslassrohrs (13).

4. Brennstoffzellensystem (2) gemäß einem der Ansprüche 1 oder 2, **dadurch gekennzeichnet, dass**
eine Durchgangsquerschnittsfläche des Hauptrohrs (8) größer ist als die des vergrößerten Abschnitts (11).

5. Brennstoffzellensystem (2) gemäß einem der Ansprüche 1 bis 4, **dadurch gekennzeichnet, dass**
das Hauptrohr (8), das Einführungsrohr (10, 10a), das Einlassrohr (12, 12a), das obere Auslassrohr (13) und das untere Auslassrohr (13) kreisförmige Querschnittsformen aufweisen.

6. Brennstoffzellensystem (2) gemäß einem der Ansprüche 1 bis 5, **dadurch gekennzeichnet, dass**
das untere Auslassrohr (14) ein öffenbares Ventil beinhaltet.

7. Brennstoffzellensystem (2) gemäß Anspruch 6, **dadurch gekennzeichnet, dass**
ein Innendurchmesser des unteren Auslassrohrs (14) gleich oder größer als 8 mm und gleich oder kleiner als ein Innendurchmesser des Hauptrohrs (8) festgelegt ist.

8. Brennstoffzellensystem (2) gemäß einem der Ansprüche 1 bis 7, worin
eine Durchflussrate der Anodengasleitung 30 l/min oder weniger beträgt.

## Revendications

1. Système de pile à combustible (2) comprenant un séparateur gaz-liquide (1) dans une conduite de gaz anodique, dans lequel le séparateur gaz-liquide (1) est adapté pour séparer le gaz d'échappement en eau et en composant gazeux et comprend :
un tuyau principal (8) qui s'étend dans la direction vers le haut et vers le bas ;
un tuyau d'introduction (10, 10a) qui est relié à une face latérale du tuyau principal (8) de manière à couper la face latérale ;
un tuyau d'admission (12, 12a) à l'intérieur duquel s'écoule le gaz d'échappement, qui est relié en outre au tuyau d'introduction (10, 10a) ;
un tuyau de sortie supérieur (13) qui est relié au côté supérieur du tuyau principal (8) ; et
un tuyau de sortie inférieur (14) qui est relié au côté inférieur du tuyau principal (8), dans lequel
le tuyau d'introduction (10, 10a) comporte une partie élargie (11, 11b) ayant une surface de section transversale de passage supérieure à une surface de section transversale de passage du tuyau d'admission (12, 12a),
**caractérisé en ce qu'**une surface de section transversale de passage du tuyau de sortie inférieur (14) est supérieure à celle du tuyau d'admission (12, 12a) et la surface de section transversale de passage du tuyau de sortie inférieur (14) est supérieure à celle du tuyau de sortie supérieur (13).

2. Système de pile à combustible (2) selon la revendication 1, **caractérisé en ce que** la surface de section transversale de passage du tuyau d'admission (12) est égale à la surface de section transversale de passage du tuyau de sortie supérieur (13).

3. Système de pile à combustible (2) selon l'une quelconque des revendications 1 et 2, **caractérisé en ce que**
une surface de section transversale de passage de la partie élargie (11b) est supérieure à celle du tuyau principal (8) et la surface de section transversale de passage de la partie élargie (11b) est supérieure à celle du tuyau de sortie supérieur (13).

4. Système de pile à combustible (2) selon l'une quelconque des revendications 1 et 2, **caractérisé en ce que**
une surface de section transversale de passage du tuyau principal (8) est supérieure à celle de la partie élargie (11).

5. Système de pile à combustible (2) selon l'une quelconque des revendications 1 à 4, **caractérisé en ce que**
le tuyau principal (8), le tuyau d'introduction (10, 10a), le tuyau d'admission (12, 12a), le tuyau de sortie supérieur (13), et le tuyau de sortie inférieur (13) ont des formes de section transversale circulaires.

6. Système de pile à combustible (2) selon l'une quelconque des revendications 1 à 5, **caractérisé en ce que**
le tuyau de sortie inférieur (14) comporte une soupape pouvant s'ouvrir.

7. Système de pile à combustible (2) selon la revendication 6, **caractérisé en ce que**
un diamètre interne du tuyau de sortie inférieur (14) est réglé pour être supérieur ou égal à 8 mm et inférieur ou égal à un diamètre interne du tuyau principal (8).

8. Système de pile à combustible (2) selon l'une quelconque des revendications 1 à 7, dans lequel un débit de la conduite de gaz anodique est de 30 L/min ou moins.
